(19)

Europäisches Patentamt

European Patent Office

Office européen des brevets

(11) **EP 1 754 899 A2**

(12) **EUROPEAN PATENT APPLICATION**

(43) Date of publication:
21.02.2007 Bulletin 2007/08

(51) Int Cl.:
*F16C 19/36* [(2006.01)]     *F16C 33/36* [(2006.01)]
*F16C 33/64* [(2006.01)]

(21) Application number: 06017072.7

(22) Date of filing: 16.08.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 18.08.2005 JP 2005237555

(71) Applicant: JTEKT CORPORATION
Chuo-ku
Osaka-shi
Osaka 542-8502 (JP)

(72) Inventors:
• **Matsuyama, Hiroki**
  **Osaka-shi**
  **Osaka 542-8502 (JP)**
• **Chiba, Hiroyuki**
  **Osaka-shi**
  **Osaka 542-8502 (JP)**
• **Toda, Kazutoshi**
  **Osaka-shi**
  **Osaka 542-8502 (JP)**

(74) Representative: **Schaeberle, Steffen**
  **Hoefer & Partner,**
  **Patentanwälte,**
  **Gabriel-Max-Strasse 29**
  **81545 München (DE)**

(54) **Tapered roller bearing and bearing apparatus of a transmission**

(57) A tapered roller bearing (1) includes an outer ring (20), an inner ring (10) including a large rib surface (13) formed into a concavely curved surfaced recessed in an axial direction, and a plurality of tapered rollers (30). R1/R2 is in the range of 0.07 to 0.8 where R1 represents radius of curvature of a large end face (33) of the tapered roller (30) and R2 represents a radius of curvature of the concavely curved surface. An arithmetical mean roughness the large end face (33) is in the range of 0.01 to 0.03μm. A total crowning amount is 50μm or larger, an outer ring crowning rate, which is a rate of the outer ring crowning amount on the total crowning amount, is 40% or larger, and a roller crowning rate, which is a rate of two times of the roller crowning amount on the total crowning amount is 20% or smaller.

## FIG. 1

EP 1 754 899 A2

**Description**

BACKGROUND OF THE INVENTION

The present invention relates to a tapered roller bearing which is preferably used in an automotive pinion shaft supporting apparatus as in a differential and a transaxle and in a transmission of a vehicle or the like, and a transmission bearing apparatus which uses the tapered roller bearing.

In recent years, there has been increasing a demand for improvement in fuel economy of motor vehicles, and in association with the demand, there is expressed a desire to reduce the running torque of tapered roller bearings which are used to support rotational shafts of transmissions and differentials installed on those motor vehicles.
In these situations, as a method of reducing the running torque of a tapered roller bearing, there is a method of reducing the rolling friction of a tapered roller bearing by crowning rolling contact surfaces of tapered rollers and raceway surfaces of inner and outer rings.
As the method like this, as is described in Patent Document No. 1 below, there is proposed, for example, a method in which raceway surfaces are crowned in an arc-shape fashion so as to realize a reduction in running torque, or, as is described in Patent Document No. 2 below, there is also proposed a method in which rolling contact surfaces of rollers and raceway surfaces which are brought into contact therewith are crowned to a shape which approximates to a logarithmic curve.

In the conventional examples, the performance of the tapered roller bearing was attempted to be enhanced by specifying the shape of the crown imparted to the raceway surface or the rolling contact surface by a numerical value. However, there had been no attempt to grasp the crown as quantity so as to specify the crowning amount so imparted to thereby reduce the running torque of the tapered roller bearing.

Patent Document No. 1: JP-A-2003-130059
Patent Document No. 2: JP-A-2001-65574

Incidentally, when the tapered roller bearing is used in an automotive pinion shaft supporting apparatus in a differential of a motor vehicle, the bearing is lubricated by gear oil having high viscosity and lubricating amount is relatively large. In this case, rolling viscous resistance and agitation loss take a major portion of the running torque of the tapered roller bearing, and mechanical internal resistance of the tapered roller bearing is very small.
On the other hand, when the tapered roller bearing is used in a typical automatic transmission or CVT (Continuously Variable Transmission) mounted in the vehicle, for example, the lubricant amount supplied to the tapered roller bearing is relatively low, and the viscosity of the lubricant oil is small. Therefore, the mechanical internal resistance of the tapered roller bearing, especially, the resistance due to the sliding friction between the large end face of the tapered roller bearing and the rib surface of the inner ring, largely affects the total running torque of the tapered roller bearing. Further, because of the lubricant condition of low viscosity and small lubricant amount, a portion of the tapered rolling bearing where the above sliding friction occurs may be burned out.

SUMMARY OF THE INVENTION

The invention is made in view of the situations, an object of thereof is to provide a tapered roller bearing which can reduce running torque by specifying, as quantity, crowning applied to rolling contact surfaces of tapered rollers and raceway surfaces of inner and outer rings while preventing burnout in the lubricant condition of low viscosity and small lubricant amount, and a transmission bearing apparatus using the same.

According to the invention, there is provided a tapered roller bearing comprising an outer ring, an inner ring, a plurality of tapered rollers interposed between the outer ring and the inner ring and a cage for the tapered rollers, the inner and outer rings and the tapered rollers having raceway surfaces and rolling contact surfaces, respectively, which are crowned, wherein when, with a large rib surface of the inner ring formed into a concavely curved surface which is recessed in an axial direction, letting a radius of curvature of an large end face of the tapered roller be R1 and a radius of curvature of the concavely curved surface be R2, a ratio of both the radius of curvatures which is expressed as R1/R2 is in the range of 0.07 to 0.8, and an arithmetical mean roughness as a surface roughness of the large end face of the tapered roller is in the range of 0.01 to 0.03$\mu$m, and wherein a total crowning amount (depth) (= outer ring crowning amount + inner ring crowning amount + roller crowning amount $\times$ 2) is 50$\mu$m or larger,

```
an outer ring crowning rate (= outer ring crowning
```

amount/total crowning amount) is 40% or larger, and a roller crowning rate (= (roller crowning amount× 2)/total crowning amount) is 20% or smaller.

According to the tapered roller bearing that is configured as is described above, the total crowning amount of crownings applied to the rolling contact surfaces and each of the raceway surfaces, the outer ring crowning rate and the roller crowning rate are set to the preferred values, contact areas between the individual rolling contact surfaces and the raceway surfaces can be reduced properly, and the rolling viscous resistance between the inner and outer rings and the tapered rollers can be reduced.

Furthermore, in the tapered roller bearing, since the arithmetical mean roughness σ1 of the large end face and the ratio R1/R2 of both the radius of curvatures are set to the preferred values, a resistance formed by a sliding friction between the large end face and the large rib surface can be reduced.

In the tapered roller bearing described above, the arithmetical mean roughness as the surface roughness of the large rib surface of the inner ring is preferably in the range of 0.01 to 0.16μm.

In the event that an arithmetical mean roughness σ2 of the large rib surface is larger than 0.16μm, there occurs a so-called escape of preload in which a preload given when the tapered roller bearing is assembled is reduced largely, leading to a risk that the rigidity and life of the tapered roller bearing are reduced.

In addition, according to the invention, there is provided a transmission bearing apparatus for rotatably supporting a rotational shaft in an interior of a transmission, wherein the rotational shaft is supported by the tapered roller bearing described above.

According to the transmission bearing apparatus, as has been described above, since the contact areas between the individual rolling contact surfaces and the raceway surfaces can be reduced properly and the sliding resistance between the large end face of the tapered roller ad the rib surface of the inner ring can be reduced, the rotation loss of the apparatus can be reduced.

According to the tapered roller bearing and the transmission bearing apparatus of the invention, the contact areas between the rolling contact surfaces and the raceway surfaces can be reduced properly and the rolling viscous resistance between the inner and outer rings and the tapered rollers can be reduced. In addition, the resistance formed by the sliding friction between the large end face of the tapered roller and the rib surface of the inner ring can be reduced. Therefore, the running torque can be reduced effectively while preventing the generation of seizing even in a lubricating condition where a lubricant of a low viscosity is supplied in a small amount.

BRIEF DESCRIPTION OF THE DRAWINGS

Fig. 1 is an axial sectional view of a tapered roller bearing according to an embodiment of the invention.

Fig. 2 is a partially enlarged view of Fig. 1.

Figs. 3A and 3B are diagrams showing the shape of a crowning (a composite crowning) on an inner ring, in which Fig. 3A shows a contour of the inner ring, and Fig. 3B shows exemplarily the shape of the crowning which is applied to a raceway surface of the inner ring.

Figs. 4A and 4B are diagrams showing the shape of a crowning (a full crowning) on the inner ring, in which Fig. 4A shows a contour of the inner ring, and Fig. 4B shows exemplarily the shape of the crowning which is applied to the raceway surface of the inner ring.

Fig. 5A and 5B are diagrams showing the shape of a crowning on a tapered roller, in which Fig. 5A shows a contour of an upper half of an axial section of a tapered roller 30, and Fig. 5B shows exemplarily the shape of the crowning which is applied to a rolling contact surface of the tapered roller.

Figs. 6A and 6B are diagrams showing the shape of a crowning on an outer ring, in which Fig. 6A shows a contour of the outer ring, and Fig. 6B shows exemplarily the shape of the crowning which is applied to a raceway surface of the outer ring.

Fig. 7 is a scatter diagram showing a relationship between a total crowning amount and a torque ratio of the tapered roller bearing.

Fig. 8 is a scatter diagram showing a relationship between an outer ring crowning rate and the torque ratio of the tapered roller bearing.

Fig. 9 is a scatter diagram showing a relationship between a roller crowning rate and the torque ratio of the tapered roller bearing.

Fig. 10 is a scatter diagram showing a relationship between an inner ring crowning rate and the torque ratio of the tapered roller bearing.

Fig. 11 is an exemplary diagram resulting when the large rib surface is viewed from a front thereof in a direction indicated by an arrow X in Fig. 2.

Fig. 12A is a graph showing a relationship between an increase and decrease rate of a major axis of a contact surface between the large end face and the large rib surface and R1/R2, which is a ratio of both radius of curvatures, and Fig. 12B is a graph showing a relationship between an increase and decrease rate of a minor axis and R1/R2, which is the ratio of the radius of curvatures.

Fig. 13 a graph showing the results of measurements of running torques of samples.

Fig. 14 is a scatter diagram showing a relationship between a composite roughness and a preload residual rate.

Fig. 15 is a graph showing the results of a measurement of running torques under a condition approximate to an actually used state using an example of the invention and a comparison example.

<u>DETAILED DESCRIPTION OF PREFERRED EMBODIMENTS</u>

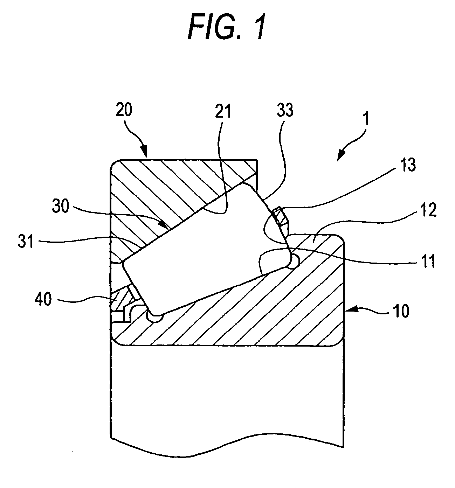

Next, referring to the accompanying drawings, a preferred embodiment of the invention will be described. Fig. 1 is an axial sectional view of a tapered roller bearing according to an embodiment of the invention.

In the figure, a tapered roller bearing 1 according to the embodiment includes an inner ring 10 having an inner ring raceway surface 11 made up of a conical surface on an outer circumference thereof, an outer ring 20 having an outer ring raceway surface 21 made up of a conical surface on an inner circumferential surface, a plurality of tapered rollers 30 each having a rolling contact surface 31 made up of a conical surface on an outer circumference thereof and disposed between both the raceway surfaces 11, 21 in such a manner as to roll freely therebetween, and a cage 40 for holding the plurality of tapered rollers 30 at predetermined intervals in a circumferential direction. The inner ring, the outer ring and the tapered rollers are made of bearing steel, for example.

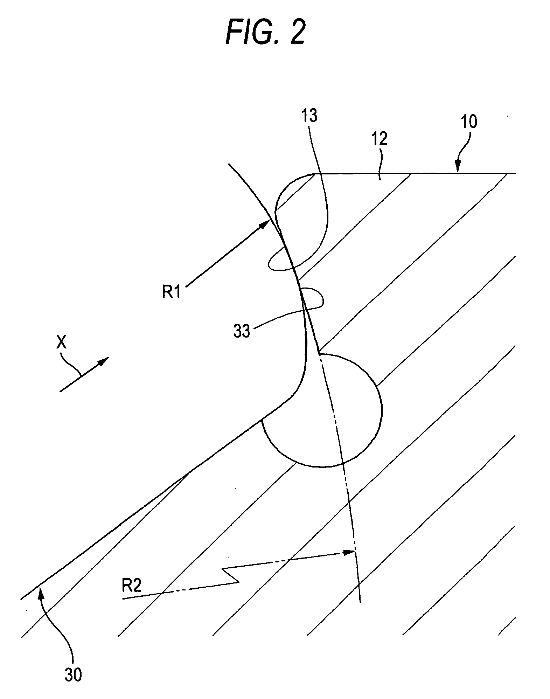

As is shown in Fig. 2, a large end face 33 of the tapered roller 30 which is an end face on a large diameter side thereof is formed into a convexly curved surface which protrudes in an axial direction of the tapered roller 30 and which is made to have a curvature radius R1. A large rib 12 is formed on a large diameter side of the inner ring 10 in such a manner as to protrude radially outwards. A large rib surface 13, which is a side of the large rib 12 which contacts the tapered roller 30, is formed into a concavely curved surface which is recessed in the axial direction in such a manner as to match the large end face 33 which is formed into the convexly curved surface and is made to have a curvature radius R2.

The inner ring raceway surface 11, the outer ring raceway surface 21 and the rolling contact surfaces 31 are crowned, which is one of characteristic configurations of the invention.

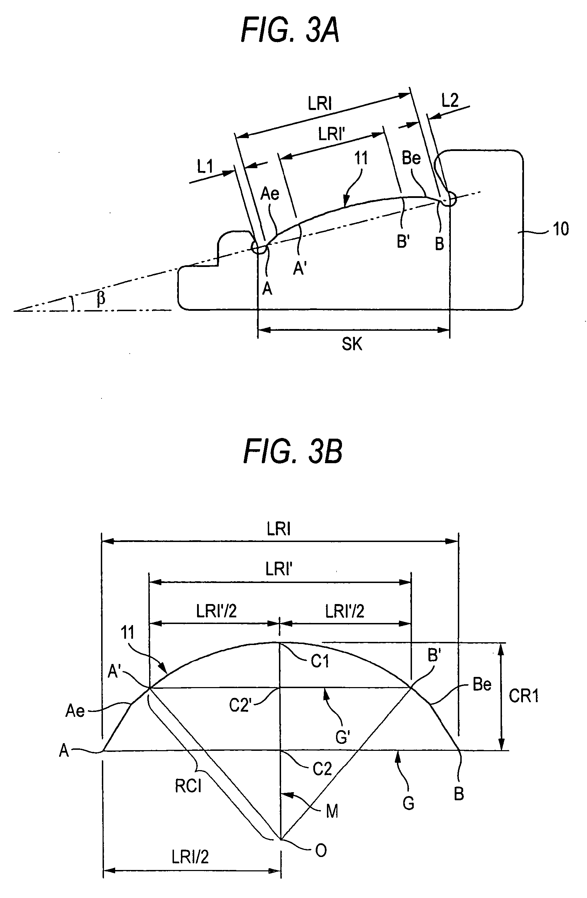

Here, a general concept of crowning will be described by taking the inner ring as an example. Fig. 3A is a diagram showing exaggeratedly a contour of an axial section of the inner ring 10 of which the inner ring raceway surface 11 is crowned. In the figure, a crowning is applied to the inner ring raceway surface 11 which contacts the rolling contact surface 31 of the tapered roller 30 in such a manner as to protrude slightly radially outwards. This crowning shows a composite crowning having a trapezoidal shape in which an arc constitutes an upper side of the trapezoid.

Hereinafter, a calculation method of a crowning amount that is applied to the inner ring 10 (hereinafter, also referred to as an inner ring crowning amount) will be described. In Fig. 3A, when the width of the inner ring raceway surface 11 with respect to the axial direction of the inner ring 10 is SK, a tapered angle of the inner ring raceway surface 11 is $\beta$, and chamfered dimensions shown as formed along both edge portions of the inner ring raceway surface 11 are L1, L2, a raceway length LRI is obtained by the following equation (1):

$$\mathtt{LRI=SK/cos\beta-(L1+L2)} \qquad \qquad \mathtt{.\ .\ .\ (1)}$$

Here, a length LRI' is defined from a center point of the raceway length LRI as shown in the figure in such a manner that LRI'=0.6LRI, and points on the inner ring raceway surface 11 which correspond to ends of the dimension LRI' are represented by A' and B', respectively. Note that while, in this case, A' , B' reside inwards of end points Ae, Be of the arc, respectively, A', B' may coincide with the end points Ae, Be of the arc, respectively.

Fig. 3B is a diagram which shows exemplarily a section of the crowning between an end point A and an end point B of the raceway length LRI of the inner ring raceway surface 11 shown in Fig. 3A. In Fig. 3B, a straight line M which passes through a center point C2' of a chord G' of the crowning at the length LRI' and a center O of the arc of the crowning intersects the chord G' at right angles and passes through a central point C1 of the arc of the crowning at the length LRI'. A distance dimension from the central point C1 of the arc of the crowning to a middle point C2 of a chord G of the crowning at the raceway length LRI is represented by the crowning amount CRI of the inner ring 10.

Note that the shape of the inner ring crowning is not limited to the trapezoidal shape in which the arc constitutes the upper side as shown in Figs. 3A and 3B, and hence, a crowning shape of every kind may be adopted which includes a shape made up of a single arc, a shape made up of a plurality of arcs, a logarithmic crowning, an oval crowning and the like, and the aforesaid concept of the crowning amount can be applied to all those crowning shapes.

The concept of crowning can be applied to the rollers and the outer ring, as well. Furthermore, the definition of the crowning amount can be applied to the rollers and the outer ring.

Note that a crowning made up of a combination of a plurality of shapes within the range of the raceway length (the raceway surface length) is referred to as a composite crowning, and a crowning made up of a single arc shape within the range of the raceway length is referred to as a full crowning.

Next, the concept of crowning and the concept of the crowning amount when an applied crowning is the full crowning will be described. At the same time, the concept of crowning for the tapered roller and the outer ring will also be described.

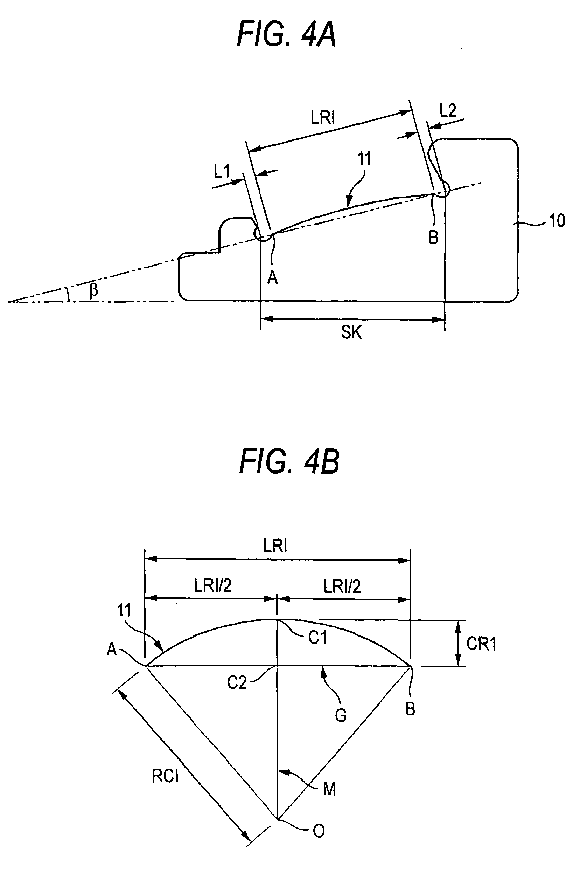

Fig. 4A is a diagram showing a contour of an axial section of the inner ring 10 in which a full crowning is applied to the inner ring raceway surface 11 thereof. In the figure, a raceway length LRI is obtained by the same equation as that used to obtain the LRI of the raceway shown in Fig. 3A:

$$LRI=SK/\cos\beta-(L1+L2)$$

On the other hand, Fig. 4B is a diagram which shows exemplarily a section of the crowning between an end point A and an end point B of the raceway length LRI of the inner ring raceway surface 11 shown in Fig. 4A. In the figure, a straight line M which passes through a middle point C2 of a chord G of the crowning at the length LRI and a center O of an arc of the crowning intersects the chord G at right angles and passes through a central point C1 of the arc of the crowning at the length LRI. A distance dimension defined by the central point C1 of the arc of the crowning and the middle point C2 is represented by an inner ring crowning amount CRI. Namely, assuming that the radius of the crowning arc is RCI as shown in the figure, the inner ring crowning amount CRI is obtained by the following equation (2):

$$CRI=RCI-\{RCI^2-(LRI/2)^2\}^{1/2} \qquad . . . (2)$$

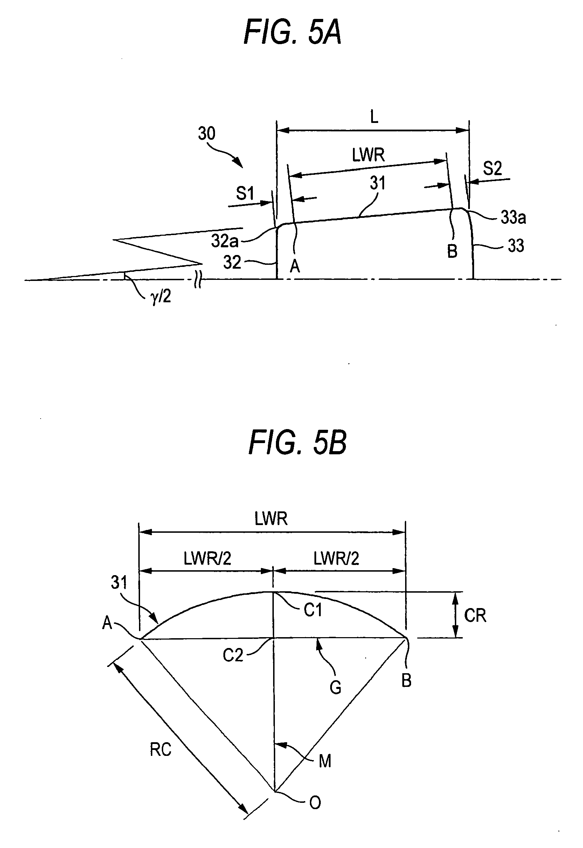

Fig. 5A is a diagram showing a contour of an upper half of an axial section of the tapered roller 30. In the figure, a rolling contact surface 31 is provided on the tapered roller 30 which is brought into rolling contact with the raceway surfaces 11, 21 of the inner and outer rings. Chamfered portions 32a, 33a are provided at both end portions of the rolling contact surface 31, respectively, and the chamfered portions are formed in such a manner as to continue to a small end face 32 which is an end face of a small diameter side of the tapered roller 30 and the large end face 33, respectively, in a smooth fashion. A full crowning is applied to the rolling contact surface 31 in such a manner as to protrude slightly radially outwards.

A method of calculating an amount of crowning applied to the tapered roller 30 (hereinafter, also referred to as a roller crowning amount) will be described hereinafter. In Fig. 5A, assuming that a roller length, which is a width of the rolling contact surface 31 with respect to a center axis direction of the tapered roller 30, is L, a tapered angle of the rolling contact surface 31 is $\gamma$, and width dimensions over which curved surfaces of the chamfered portions 32a, 33a which are formed at both the end portions of the rolling contact surface 31 are removed from a total width of the rolling contact surface are S1, S2, the aforesaid roller effective length LWR of the tapered roller is obtained by the following equation (3):

$$LWR=L/\cos(\gamma/2)-(S1+S2) \qquad . . . (3)$$

Note that constant values are determined for S1, S2 in the equation depending on the size of a bearing.

Fig. 5B is a diagram which shows exemplarily the shape of the crowning between an end point A and an end point B of the roller effective length LWR of the rolling contact surface 31 shown in Fig. 5A. In the figure, a straight line M which passes through a middle point C2 of a chord G of the crowning at the roller effective length LWR and a center O of an arc of the crowning intersects the chord G at right angles and passes through a central point C1 of the arc of the crowning at the roller effective length LWR.

In this specification, a distance dimension between the crowning arc central point C1 and the middle point C2 is represented by a crowning amount CR. Assuming that the radius of the crowning arc is RC as shown in the figure, the roller crowning amount CR is obtained by the following equation (4):

$$CR=RC-\{RC^2-(LWR/2)^2\}^{1/2} \qquad \ldots \quad (4)$$

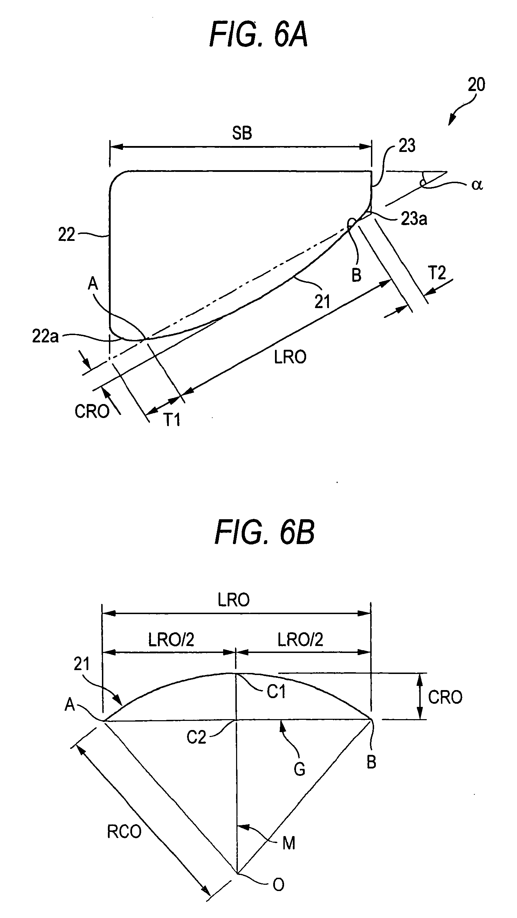

Next, a method of calculating a crowning amount applied to the outer ring 20 in which a full crowning is applied to the raceway surface thereof (hereinafter, also referred to as an outer ring crowning amount) will be described. Fig. 6A is a diagram which shows exaggeratedly a contour of an axial section of the outer ring 20 in which a full crowning is applied to the outer ring raceway surface 21. In the figure, a crowning having a radially inwardly projecting arc-shaped section is applied to the outer ring raceway surface 21 which is brought into rolling contact with the rolling contact surface 31 of the tapered roller 30. Chamfered portions 22a, 23a are provided from both end portions towards axial end faces thereof, respectively. These chamfered portions 22a, 23a are formed in such a manner as to continue to a small inside diameter side end face 22 and a large inside diameter side end face 23, respectively, in a smooth fashion.

In Fig. 6A, assuming that a width of the outer ring raceway surface 21 with respect to an axial direction of the outer ring 20 is SB, a tapered angle of the outer ring raceway surface 21 is $\alpha$, and width dimensions over which curved surfaces of the chamfered portions 22a, 23a which are formed at both the end portions of the outer ring raceway surface 21 are removed from a total width of the outer ring raceway surface are T1, T2, the aforesaid raceway length LRO is obtained by the following equation (5):

$$LRO=SB/\cos\alpha-(T1+T2) \qquad \ldots \quad (5)$$

Note that constant values are determined for T1, T2 in the equation depending on the size of a bearing.

Fig. 6B is a diagram which shows exemplarily the shape of the crowning between an end point A and an end point B of the raceway length LRO of the outer ring raceway surface 21 shown in Fig. 6A. In the figure, a straight line M which passes through a middle point C2 of a chord G of the crowning at the raceway length LRO and a center O of an arc of the crowning intersects the chord G at right angles and passes through a central point C1 of the arc of the crowning at the raceway length LRO.

In this specification, a distance dimension between the crowning arc central point C1 and the middle point C2 is defined as a crowning amount CRO. Assuming that the radius of the crowning arc is RCO as shown in the figure, the outer ring crowning amount CRO is obtained by the following equation (6) :

$$CRO=RCO-\{RCO^2-(LRO/2)^2\}^{1/2} \qquad \ldots \quad (6)$$

The crowning amounts of the tapered roller and the inner and outer rings when the full crownings are applied thereto can be obtained in the ways described above.

Note that crowning amounts can, of course, be calculated based on the general concept of crowning that has been described before for the tapered roller 30 and the inner and outer rings 10, 20 to which the full crownings are applied. Namely, similar to the case where the length LRI' is obtained in Figs. 3A and 3B, an LWR' with respect to the LWR for the tapered roller 30 and an LRO' with respect to the LRO for the outer ring 20 may be obtained. The crowning amounts obtained based on the general concept of crowning in this way substantially coincide with the values obtained based on the concept of full crowning (Figs. 5A to 6B).

In this specification, a total crowning amount, an outer ring crowning rate, a roller crowning rate and an inner ring crowning rate are calculated from the aforesaid the roller crowning amount, the inner ring crowning amount and the outer ring crowning amount based on the following equations (7), (8), (9), (10):

$$\text{Total crowning amount = outer ring crowning amount + inner ring}$$
$$\text{crowning amount + roller crowning amount} \times 2 \quad \ldots \quad (7)$$

```
Outer ring crowning rate = outer ring crowning amount/total
crowning amount   . . . (8)


Roller crowning rate = (roller crowning amount × 2)/total
crowning amount   . . . (9)


Inner ring crowning rate = inner ring crowning amount/total
crowning amount   . . . (10)
```

In the tapered roller bearing according to the embodiment, running torque is reduced while suppressing the variability of the preload to be applied by controlling the total crowning amount, outer ring crowning rate, roller crowning rate, surface roughness of the large end face 33 of the tapered roller 30, surface roughness of the large rib surface 13 of the inner ring 10, curvature radius of the large end face 33 and curvature radius of the inner ring 10, respectively. The results of a study that was made on relationships between controlled values of the afore-raised factors and the preload and running torque of the tapered roller bearing will be described below.

Relationship between running torque, total crowning amount and respective crowning rates

Firstly, the results of an investigation test carried out to clarify the relationship between the total crowning amount and the respective crowning rates in an actual utilization state where the tapered roller bearing is actually used will be described.
As tapered roller bearings used in this test, a number of tapered roller bearings (such as to correspond to JIS30306) having the configuration shown in Fig. 1 were prepared which were set such that their total crowning amounts and respective crowning rates differed, and running torques of the tapered roller bearings so prepared were measured experimentally.
As a method of measuring running torques of the tapered roller bearings, for example, a bearing testing apparatus was used, and after the tapered roller bearings according to the embodiment were each set on the testing apparatus, one of the inner and outer rings was rotated to measure a running torque acting on the other of the inner and outer rings. As testing conditions, gear oil for differentials was used as a lubricant, an axial load of 4kN was applied as a dummy load for preload, and two rotational speeds, 300rpm and 2000rpm, were used. Running torques which would result in an actually used state are measured.
As a lubricating condition for the test, when the rotational speed of 300rpm was used, the lubricant at the normal temperature was only applied before the test, and thereafter no lubricant was applied during the test. On the other hand, when the rotational speed of 2000rpm was used, the lubricant at an oil temperature of 323K (50°C) was supplied in circulation in an amount of 0.5 liter per minute during the test. The reason the different methods of supplying the lubricant were used according to the rotational speeds used was that only a required minimum amount of the lubricant for each of the rotational speeds was made to be supplied so as to eliminate the possibility of being affected by agitation loss which would be produced when the lubricant is supplied excessively to thereby extract a running torque produced by rolling friction.
A running torque was measured on each of the tapered roller bearings in which the total crowning amounts and respective crowning rates were set to different values. Then, a range of values which reduce running torque was specified by grasping a relationship between the total crowning amount and respective crowning rates, and the running torque.

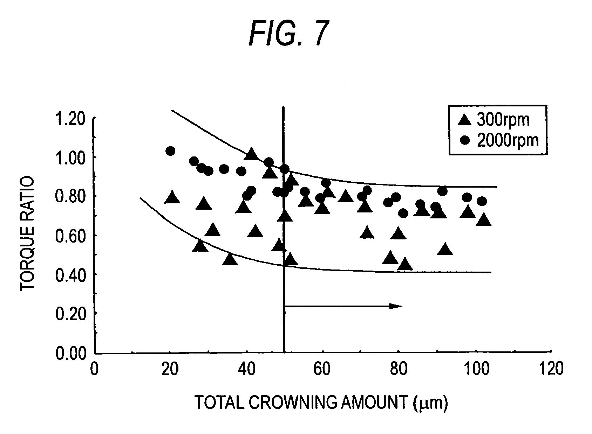

Fig. 7 is a scatter diagram showing the relationship between the total crowning amount and a torque ratio (a running torque/a predetermined value) of the tapered roller bearings on which measurements were carried out. As is clear from the diagram, while the torque ratio scatters over a wide width when the total crowning amount is 50μm or smaller, there is shown a tendency in which a maximum value of the torque ratio so scattering gradually decreases as the total crowning amount increases. When the total crowning amount is 50μm or larger, it is seen that the torque ratio is stably distributed within a range of lower values, compared to the case where the total crowning amount is 50μm or smaller.
When the total crowning amount exceeds 100μm, excessive crownings are applied to the tapered roller and the inner and outer rings, leading to a risk that the tapered roller does not roll in a stable fashion. Consequently, the total crowning amount is preferably 100μm or smaller.

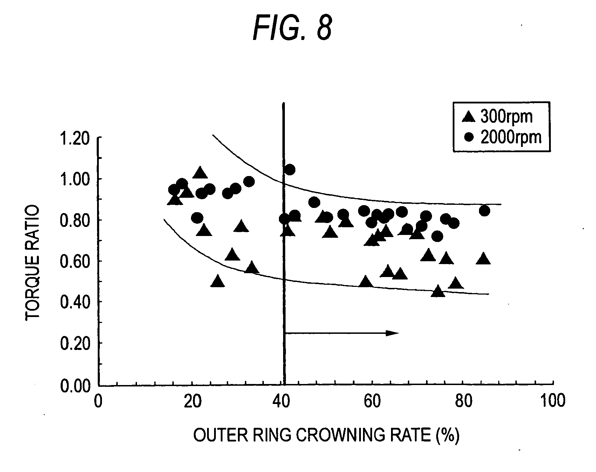

Next, Fig. 8 is a scatter diagram showing the relationship between the outer ring crowning rate and the torque ratio of the tapered roller bearings. As is clear from the diagram, when the outer ring crowning rate is 40% or smaller, a maximum value of the torque ratio gradually decreases as the outer ring crowning rate increases. When the outer ring crowning rate is 40% or larger, it is seen that the torque ratio is stably distributed within a range of lower values, compared to the case where the outer crowning rate is 40% or smaller.

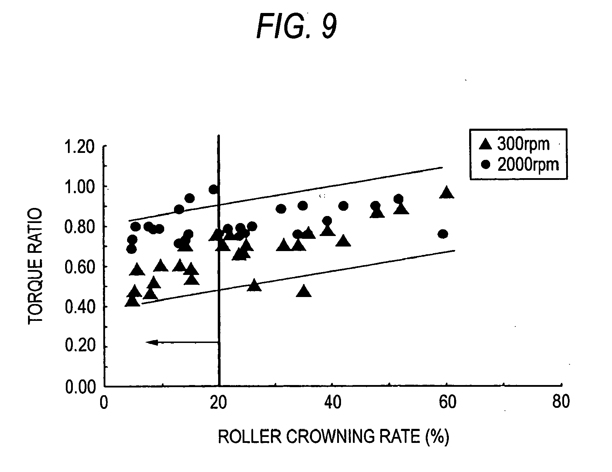

Fig. 9 is a scatter diagram showing the relationship between the roller crowning rate and the torque ratio of the tapered roller bearings. As is clear from the diagram, when the roller crowning rate is 20% or larger, a maximum value of the torque ratio gradually decreases as the roller crowning rate reduces. When the roller crowning rate is 20% or smaller, it is seen that the torque ratio is stably distributed within a range of smaller values compared to the case where the roller crowning rate is 20% or larger.

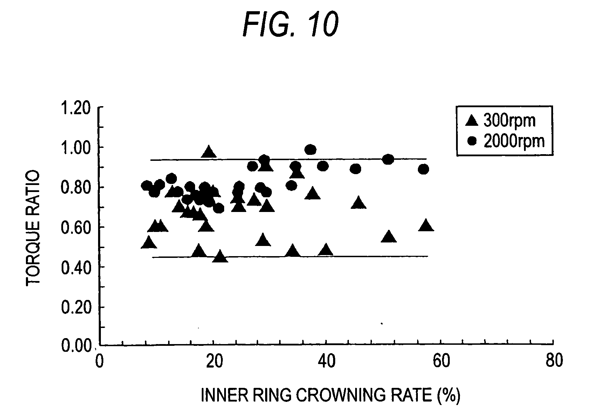

Fig. 10 is a scatter diagram showing the relationship between the inner ring crowning rate and the torque ratio of the tapered roller bearings. As is clear from the diagram, the torque ratio is stable within a substantially constant range as the inner crowning rate varies. Namely, no remarkable correlation with respect to the torque ratio of the tapered roller bearings was identified. However, contact loads produced in the vicinity of axial end portions of the contact surface between the inner ring raceway surface 11 and the rolling contact surface 31 can be reduced by setting the inner ring crowning rate to 10% or larger, whereby, even in the event that a so-called edge load is applied, the effect of the edge load can be reduced, so as to prevent the reduction in service life of the tapered roller bearing.

As has been described heretofore, as a result of experimental measurements and study on the relationship between the running torque ratio of the tapered roller bearings, that is, the running torques in the actually utilized state of the tapered roller bearings, and the total crowning amount and the respective crowning rates, a view could be obtained that the running torque in the actually utilized state of the tapered roller bearings can be reduced by satisfying the conditions that the total crowning amount is 50$\mu$m or larger, the outer ring crowning rate is 40% or larger and the roller crowning rate is 20% or smaller.

While the outer ring crowning rate may be 100%, when considering the fact that the inner ring crowning is applied by 10% or larger as has been described above, the outer ring crowning rate is preferably 90% or smaller. Further, in the event that the roller crowning rate is 0%, with the outer ring crowning rate and the inner ring crowning rate staying within the aforesaid predetermined ranges, the effect of reducing the running torque can be obtained. Consequently, the roller crowning rate may only have to be set in a range from 0% or larger to 20% or smaller. Since the outer ring is crowned to realize an outer ring crowning rate of 40% or larger, the inner ring crowning rate is preferably 60% or smaller.

Next, the results of an investigation will be described which was carried out, by paying attention to the shapes and surface roughnesses of the large end face of the tapered roller and the large rib surface of the inner ring, to clarify the effects imposed on the running torque of the tapered roller bearing by the shapes and surface roughnesses of the components of the tapered roller bearing.

Relationship between the curvature radiuses R1, R2 of the large end face and the large rib surface, and the running torque

Next, the results of an investigation test will be described which was carried out on effects imposed on the running torque of the tapered roller bearing by the curvature radius R1 of the large end face and the curvature radius R2 of the large rib surface 13 (refer to Fig. 2).

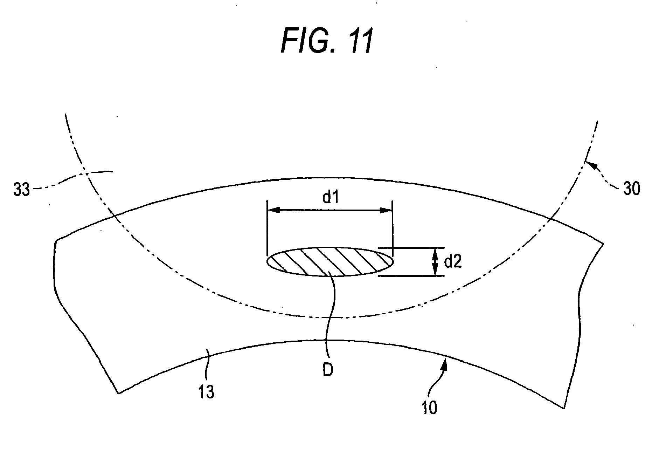

Fig. 11 is an exemplary diagram when the large rib surface is viewed from a front thereof in a direction indicated by an arrow X in Fig. 2. In the diagram, a hatched portion shows exemplarily a contact surface D between the large end face 33 and the large rib surface 13. When the inner and outer rings 10, 20 rotate relatively to each other, the large end face 33 and the large rib surface 13 rotate relatively to each other while sliding on this contact surface D.

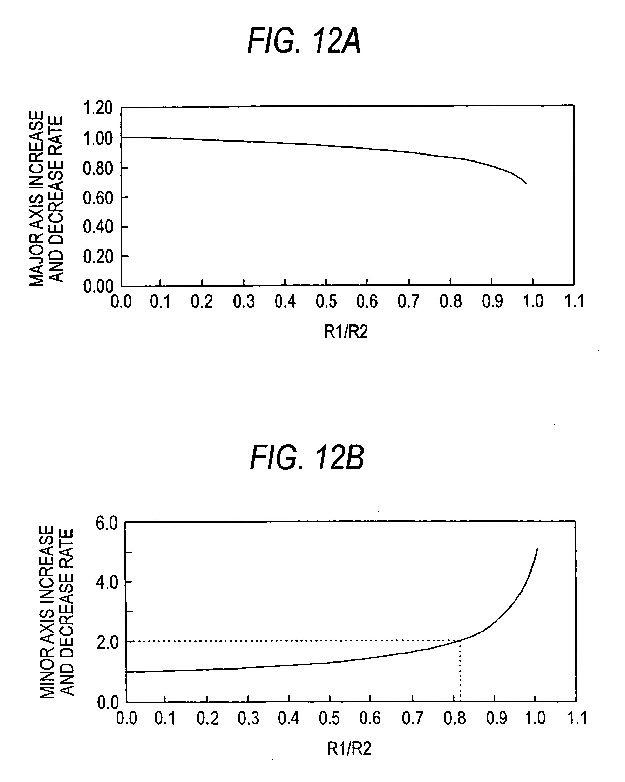

This contact surface D is substantially an ellipse, and a major axis d1 and a minor axis d2 change depending on the value of R1/R2 which is a ratio between the curvature radius R1 of the large end face and the curvature radius R2 of the large rib surface. The results of a calculation of a relationship of the major axis d1 and the minor axis d2 and both the curvature radiuses R1, R2 are shown in Figs. 12A and 12B. Fig. 12A is a graph showing a relationship between the increase and decrease rate of the major axis d1 and R1/R2 which is the ratio of both the curvature radiuses, and Fig. 12B is a graph showing a relationship between the increase and decrease rate of the minor axis d2 and R1/R2 which is the ratio of the curvature radiuses. Note that the increase and decrease rates of both the axes d1 and d2 are such as to represent the proportion of increase and decrease in ratio by assuming that the value of each axis is 1 when the value of R1/R2 is almost 0. Note that the aforesaid calculation was made based on the elastic contact theory of Hertz that is described in, for example, "Tedric A Harris/ROLLING BEARING ANALYSYS Third Edition p153 to p166."

According to Fig. 12A, while the increase and decrease rate of the major axis d1 slightly decreases as R1/R2 which is the ratio of both the curvature radiuses increases, no remarkable change is not identified. On the other hand, in Fig. 12B, while the increase and decrease rate of the minor axis d2 rises moderately until R1/R2 rises from 0 to the vicinity of 0.7, a remarkable rise is identified when R1/R2 rises at the vicinity of 0.8. Here, when the minor axis d2 increases and the major axis d1 decreases in association with an increase of R1/R2, the contact surface D is increased and the bearing pressure thereon is decreased. It is considered that this facilitates the formation of an oil film to thereby increase the lubricity. However, when the increase and decrease rate of the minor axis d2 becomes almost 2. 0 or larger, the proportion of the change in minor axis d2 with respect to the change in R1/R2 increases rapidly. When the minor axis d2 becomes too large, there is caused a risk that the contact surface D protrudes into abrasion relief portion existing on a circumferential edge portion of the large rib surface of the inner ring. In case the protrusion occurs, a so-called edge load is produced between the tapered rollers and the inner ring, leading to a risk that the edge load so produced may cause an increase in the running torque which includes the assembly torque and an abnormal wear. Due to this, R1/R2, which is the ratio of both the curvature radiuses is preferably 0.8 or smaller.

In addition, in the event that R1/R2 is made smaller than 0.07, the large rib surface 13 comes to have such a large radius of curvature that the large rib surface 13 is regarded substantially as a flat plane, the contact surface D between the large end face 33 and the large rib surface 13 is reduced. Consequently, the bearing pressure on the contact surface D is raised, leading to a risk that the running torque is increased. Due to this, R1/R2 is desirably 0.07 or larger.

Relationship between surface roughnesses of the large end face of the tapered roller and the large rib surface of the inner ring and the running torque

Next, the results of an investigation for the effects imposed on the running torque by respective surfaces roughnesses of the large end face of the tapered roller and the large rib surface of the inner ring will be described. As tapered rollers that were used in this investigation, four kinds of samples (Samples 1 to 4) were prepared which were set to values shown in Table 1 below for the arithmetical mean roughness σ1 as the surface roughness of the large end face and the arithmetical mean roughness σ2 as the surface roughness of the large rib surface, and the samples were given the same specifications except for these two items. As test conditions, the following conditions were adopted: the axial load was 5.5kN, the rotational speed was 100 to 3000rpm, and ATF (automatic transmission oil) heated to an oil temperature of 353K (80°C) was supplied in a proper amount, and the inner and outer rings were rotated relatively in these test conditions to measure respective running torques of the sample tapered roller bearings.
Table 1

|  | Sample 1 | Sample 2 | Sample 3 | Sample 4 |
|---|---|---|---|---|
| Arithmetical mean roughness σ1 of large end face of roller | 0.02 | 0.02 | 0.04 | 0.08 |
| Arithmetical mean roughness σ1 of large end face of roller | 0.02 | 0.11 | 0.03 | 0.03 |
| Composite roughness σ(μm) | 0.036 | 0.112 | 0.05 | 0.085 |

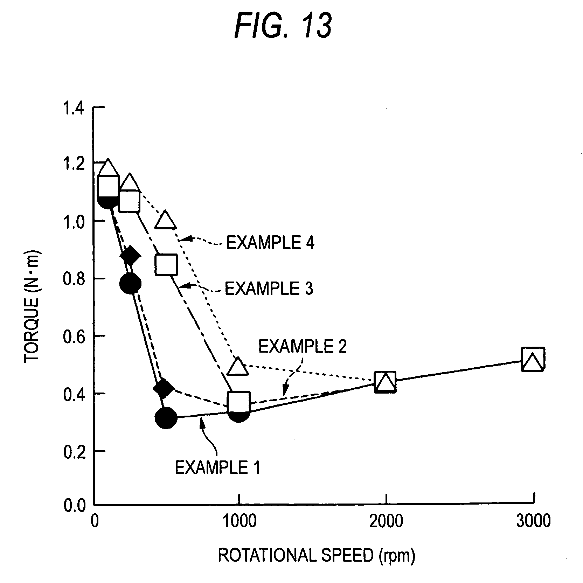

The results of measurements of running torques of Examples 1 to 4 are shown in Fig. 13.
Note that in Table 1, the composite roughness σ is a value that is expressed by the following equation:

$$\text{Composite roughness } \sigma = (\sigma1^2 + \sigma2^2)1/2 \quad . \quad . \quad . \quad (11)$$

In Fig. 13, when comparing Example 1 to Example 2, the running torques show equal values over almost the whole range of the rotational speed. On the other hand, as compared to Examples 1 and 2, Example 3 and Example 4 show larger running torque values in a rotational speed range of 1000rpm or lower. The running torques thereof show values substantially equal to those of Examples 1 and 2 in a rotational speed range of 2000 to 3000rpm.
In Examples 1 and 2, the arithmetical mean roughnesses σ1 of the large end faces thereof are set to 0.02μm, respectively, which are the same value, whereas the arithmetical mean roughnesses σ2 of the large rib surfaces thereof are set differently; Example 1 is set to 0.03μm and Example 2 to 0.11μm, and Example 2 is hence set to the larger value. Thus, although Example 2 is set to the large value with respect to the arithmetical mean roughness σ2 of the large rib surface, there is seen no large difference in running torque value between Example 1 and itself.
In addition, In Examples 3 and 4, the arithmetical mean roughnesses σ1 of the large end faces thereof are set to the larger values (0.04μm, 0.085μm) than those of Example 1, and the arithmetical mean roughnesses σ2 of the large rib surfaces thereof are set to the same value (0.03μm) as that of Example 1. Thus, although the arithmetical mean roughnesses σ2 of the large rib surfaces of Examples 3 and 4 are set to the same value as that of Example 1, there is generated a large difference in running torque value between Examples 3 and 4 and Example 1.

It is seen from the facts described above that the running torque of the tapered roller bearing can be reduced by setting the arithmetical mean roughness $\sigma 1$ of the large end face thereof and that the value of the arithmetical mean roughness $\sigma 2$ of the large rib surface thereof imposes no serious effect on the running torque of the tapered roller bearing within the range of the experiment.

Although not specifically shown, it is also confirmed from the results of the investigation that a tapered roller bearing in which the arithmetical mean roughness $\sigma 1$ of the large end face thereof is set to $0.03\mu m$ exhibits the same running torque as those of Examples 1 and 2. Namely, it has become obvious that the running torque of the tapered roller bearing can be reduced by making the arithmetical mean roughness $\sigma 1$ of the large end face be $0.03\mu m$ or smaller.

In addition, while the running torque of the tapered roller bearing can be reduced with the arithmetical mean roughness $\sigma 1$ of the large end face made to be $0.03\mu m$ or smaller, it is difficult from the view point of machining technique to reduce the arithmetical mean roughness $\sigma 1$ of the large end face below or to a value smaller than $0.01\mu m$, and therefore, a lower limit value of the arithmetical mean roughness $\sigma 1$ of the large end is $0.01\mu m$.

In the aforesaid experiment, although there is seen no remarkable reduction in running torque in a rotational speed range of 1000rpm or higher, the running torque is reduced largely in the rotational speed range of lower than 1000rpm. The reason for this is that since a sufficient oil film is formed in the sliding portions of the tapered roller bearing in the rotational speed range of 1000rmp or higher, it is considered that a resistance resulting at each of the sliding portions from a sliding friction generated thereat is made difficult to occur.

On the contrary, in the rotational speed range of 1000rpm or lower, there occurs a case where a sufficient oil film is not formed, and the sliding portions, in particular, the sliding friction generated between the large end faces of the tapered rollers and the rib surface of the inner ring affects largely the running torque of the whole tapered roller bearing. Consequently, it is considered that the resistance resulting from the sliding friction between the large end faces and the rib of the inner ring can be reduced by reducing very largely the arithmetical mean roughness $\sigma 1$ of the large end face to such as $0.03\mu m$ or smaller, thereby making it possible to reduce the running torque while suppressing the occurrence of seizing.

In addition, in the tapered roller bearing, when lubricated by an ATF whose viscosity is relatively low, the resistance resulting from the sliding friction between the large end faces of the tapered rollers and the rib surface of the inner ring affects largely the running torque of the whole tapered roller bearing. This is because the oil film forming capability is reduced by the low viscosity of the lubricant used.

Namely, with the arithmetical mean roughness $\sigma 1$ of the large end face made to be $0.03\mu m$ or smaller, the tapered roller bearing can preferably be applied to rolling element bearings which are used in transmissions such as automatic transmissions, CVT's (continuously variable transmissions), manual transmissions and the like of which the interior is lubricated by automatic transmission lubricants having a low viscosity such as ATF.

As to the surface roughness of the large rib surface of the inner ring

Next, the results of an investigation will be described which was carried out on the surface roughness $\sigma 2$ of the large rib surface of the inner ring.

Firstly, the results of an experiment will be described which was carried out to investigate a preload change by composite roughness $\sigma$, which is calculated by the aforesaid equation (11), in an initial stage of the use of the tapered roller bearing.

As tapered roller bearings for use in the experiment, a plurality of tapered roller bearings were prepared which were set to various predetermined composite roughness $\sigma$ values which range from 0.05 to $0.32\mu m$. These tapered roller bearings were assembled under a constant position preload (5.5kN), and thereafter, inner and outer rings were rotated relatively at a rotational speed of 2000rpm for 20 hours in a gear oil of 85W-90 which was heated to an oil temperature of 343K (70°C), and preloads were measured after having been cooled, so that the tapered roller bearings were evaluated by preload residual rate which represents in percentage a degree at which the preload was reduced during the test.

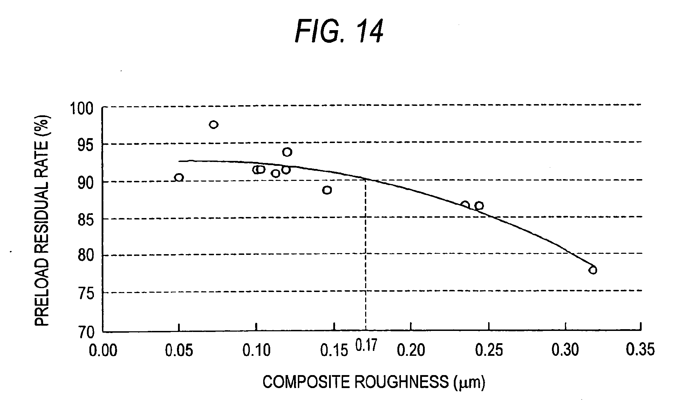

Fig. 14 is a scatter diagram showing the relationship between the composite roughness $\sigma$ and the preload residual rate. In the diagram, a curve H is a curve obtained by regressing a plurality of measuring points plotted in the diagram thereto in a curvilinear fashion. According to this curve H, as the value of the composite roughness $\sigma$ increases, the preload residual rate gradually decreases. The value of the composite roughness $\sigma$ when the preload residual rate is 90% is $0.17\mu m$.

The preload residual rate indicates how much the preload which resulted when the tapered roller bearing was assembled has decreased in an initial stage of the use thereof, and it is confirmed that a preload residual rate of 90% or larger is necessary and sufficient.

Consequently, from the results of the experiment, a preload retaining rate that is necessary for the tapered roller bearing can be maintained by making the value of the composite roughness $\sigma$ be $0.17\mu m$ or smaller.

Namely, the surface roughness $\sigma 2$ of the large rib surface is preferably in a range where the composite roughness $\sigma$ is made to be $1.17\mu m$ or smaller, that is $1.16\mu m$ or smaller. In this case, since the value of the composite roughness $\sigma$ becomes $0.17\mu m$ or smaller, the necessary preload retaining rate can be maintained, whereby a so-called escape of preload can be prevented in which the preload is largely reduced when the tapered roller bearing is put to an actual use. In addition, although the arithmetical mean roughness σ2 of the large rib surface may be 0.16μm or smaller, as is described above, since it is difficult from the view point of machining technique to reduce the arithmetical mean roughness σ2 of the large rib surface below or to a value smaller than 0.01μm, the arithmetical mean roughness σ2 of the large rib surface may be 0.01μm or larger.

Thus, as has been described heretofore, according to the tapered roller bearing of the invention, by being set to fulfill the aforesaid individual conditions, the contact areas between the rolling contact surfaces and the raceway surfaces can be reduced properly, and the rolling viscous resistance between the inner and outer rings and the tapered rollers can be reduced. Furthermore, since the resistance attributed to the sliding friction between the large end faces of the tapered rollers and the rib surface of the inner ring can be reduced, the running torque can effectively be reduced while preventing the occurrence of seizing even in a lubricating condition where a lubricant of a low viscosity is supplied in a small amount.

(Example)

Next, the results of a comparison investigation will be described which was made using an example according to the invention and a comparison example in which specific numerical values were set, respectively. Main specification data of the example of the invention and the comparison example are shown in Table 1.

Table 1

| Bearing Specifications | | Example of Invention | Comparison Example |
|---|---|---|---|
| Main Dimensions | Bore Diameter (mm) | 30 | 30 |
| | Outside Diameter (mm) | 72 | 72 |
| | Width (mm) | 20.75 | 20.75 |
| Crowning | Outer Ring Crowning Amount (μm) | 40 | 7 |
| | Inner Ring Crowning Amount (μm) | 28 | 12 |
| | Roller Crowning Amount (μm) | 4 | 4 |
| | Total Crowning Amount (μm) | 76 | 27 |
| | Outer Ring Crowning Rate (%) | 53 | 26 |
| | Roller Crowning Rate (%) | 11 | 30 |
| | Inner Ring Crowning Rate (%) | 37 | 44 |
| Surface Roughness of Roller Large End Face (σ1, μm) | | 0.03 | 0.08 |
| Surface Roughness of Inner Ring Large Rib Surface (σ2, μm) | | 0.04 | 0.06 |
| Ratio between Curvature radius of Roller Large End Face and Curvature radius of Inner Ring Large rib surface (R1/R2) | | 0.38 | 0 |

As to the crowning, the example of the invention was set so as to fulfill the conditions (the total crowning amount is 50μm or larger, the outer ring crowning rate is 40% or larger, the roller crowning rate is 20% or smaller). On the other hand, the comparison example was set to fall in a range of crowning values which does not fulfill the conditions.

As to the surface roughnesses of the large end face of the tapered roller and the large rib surface of the inner ring, the example of the invention was set such that the arithmetical mean roughness σ1 of the large end face fulfilled the condition (0.03μm or larger). On the other hand, in the comparison example, the value of the arithmetical mean roughness σ1 was set larger not to fulfill the condition.

As to the relationship between the curvature radiuses R1 and R2 of the large end face and the large rib surface, the example of the invention was set such that the R1/R2 fulfilled the condition (0.07 or larger and 0.8 or less). On the other hand, the comparison example was set such that the value of the R1/R2 is set to 0 not to fulfill the above condition.

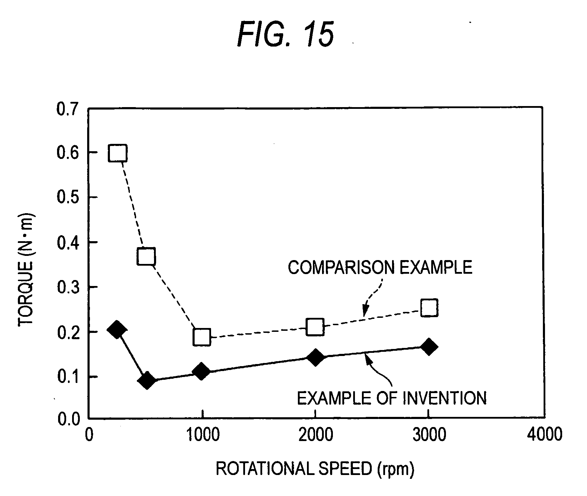

The results of a measurement of running torque are shown in Fig. 15 which was carried out under a condition close to an actually used state using the example of the invention and the comparison example. As a measuring condition of running torque in Fig. 15, the example of the invention and the comparison example were run in sufficiently, an axial load of 4kN was applied, a rotational speed of 250 to 3000rpm was used, and ATF (automatic transmission oil) was supplied at an oil temperature of 80°C, so that a condition approximate to the actually used state in the typical automatic transmission was reproduced.

It could be verified from Fig. 15 that the running torque of the example of the invention was remarkably reduced over the full rotational speed range of 250 to 3000rpm, compared to the comparison example.

It has become obvious from the results of the measurements of the running torques of the example of the invention and the comparison examples that according to the tapered roller bearings of the invention, the reduction in running torque thereof can be realized in an actually used condition as in an automatic transmission.

In addition, as has been described heretofore, it is obvious that according to the tapered roller bearing of the invention, the reduction in running torque thereof can be realized in the circumstances where the tapered roller bearing is lubricated by the ATF whose viscosity is relatively low. Consequently, the tapered roller bearing of the invention can preferably be applied to rolling element bearings which are used in transmissions such as automatic transmissions, CVT's (continuously variable transmissions), manual transmissions and the like of which the interior is lubricated by automatic transmission lubricants having a low viscosity such as ATF.

## Claims

1. A tapered roller bearing comprising:

    an outer ring that includes a crowned raceway surface;
    an inner ring that includes a crowned raceway surface and a large rib surface formed into a concavely curved surface recessed in an axial direction;
    a plurality of tapered rollers that include crowned rolling contact surfaces and are interposed between the outer ring and the inner ring; and
    a cage for the tapered rollers, wherein
    R1/R2 is in the range of 0.07 to 0.8 where R1 represents radius of curvature of an large end face of the tapered roller and R2 represents a radius of curvature of the concavely curved surface of a large rib face of the inner ring,
    an arithmetical mean roughness as a surface roughness of the large end face of the tapered roller is in the range of 0.01 to 0.03$\mu$m,
    a total crowning amount, which is a sum of outer ring crowning amount, inner ring crowning amount and two times of roller crowning amount, is 50$\mu$m or larger,
    an outer ring crowning rate, which is a rate of the outer ring crowning amount on the total crowning amount, is 40% or larger, and
    a roller crowning rate, which is a rate of two times of the roller crowning amount on the total crowning amount is 20% or smaller.

2. The tapered roller bearing according to claim 1, wherein the arithmetical mean roughness as a surface roughness of the large rib surface of the inner ring is in the range of 0.01 to 0.16$\mu$m.

3. A transmission bearing apparatus for rotatably supporting a rotational shaft in an interior of a transmission, wherein the rotational shaft is supported by the tapered roller bearing according to Claim 1.

# FIG. 1

## FIG. 2

## FIG. 3A

## FIG. 3B

## FIG. 4A

## FIG. 4B

# FIG. 5A

# FIG. 5B

## FIG. 6A

## FIG. 6B

## FIG. 7

## FIG. 8

FIG. 9

# FIG. 10

## FIG. 11

## FIG. 12A

## FIG. 12B

# FIG. 13

## FIG. 14

## FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003130059 A

- JP 2001065574 A

**Non-patent literature cited in the description**

- **TEDRIC A HARRIS.** *ROLLING BEARING ANAL-YSYS,* 153-166